# EUROPEAN PATENT APPLICATION

(11) **EP 1 388 798 A1**
(43) Date of publication of application: **11.02.2004**
(21) Application number: 03254932.1
(22) Date of filing: 07.08.2003
(51) Int. Cl.: G06F 17/60

(54) **Advertisement distribution apparatus and method**

(30) Priority: 09.08.2002 JP 2002232217
(71) Applicant: NISSAN MOTOR COMPANY, LIMITED, Yokohama-shi, Kanagawa 221-0023 (JP)
(72) Inventor: Fujimoto, Hiroshi, Kanagawa (JP)
(74) Representative: Godwin, Edgar James

(57) **Abstract**

From a plurality of sets of advertisement data stored at a local server, specific advertisement data to be transmitted to an advertisement displaying vehicle are selected based upon different remuneration offered by individual advertisers for advertisement display and the advertisement data thus selected are transmitted to the advertisement displaying vehicle. As a result, overexposure of an advertisement from a specific advertiser is prevented.

## Description

The present invention relates to an advertisement distribution apparatus and an advertisement distribution method that may be adopted to distribute advertisements to vehicles having display devices for displaying advertisements by utilizing a road-to-vehicle communication system.

There are systems in the known art that distribute advertisements to vehicles having display devices for displaying advertisements by utilizing a road-to-vehicle communication system. Through such a system, a vehicle that displays advertisements engages in wireless communication with a roadside antenna to receive advertisement data and exhibits the advertisements via an external display unit.

However, since advertisements are displayed at advertisement displaying vehicles owned by parties under contract to advertisers, an advertiser offering a high advertising fee is naturally able to contract more vehicles in the system in the related art, giving rise to a problem in that the advertisements from other advertisers are not given as much public exposure.

It would be desirable to provide an advertisement distribution apparatus and an advertisement distribution method through which advertisements are distributed by taking into consideration the ratio at which a plurality of advertisements should be distributed to the advertisement displaying vehicles.

An advertisement distribution apparatus according to the present invention comprises a storage means provided at each area where advertisements are to be exhibited, for storing in memory a plurality of sets of advertisement data from a plurality of advertisers, a ratio calculation means for calculating a ratio at which the plurality of sets of advertisement data are to be transmitted to advertisement displaying vehicles, a selection means for selecting advertisement data to be transmitted to each advertisement displaying vehicle from the plurality of sets of advertisement data based upon the ratio calculated by the ratio calculation means and a data transmission means for transmitting the advertisement data selected by the selection means to the individual advertisement displaying vehicles.

In an advertisement distribution method according to the present invention for transmitting advertisement data from a plurality of roadside servers at which the advertisement data are stored to a advertisement displaying vehicles present within communication ranges of roadside antennas installed in correspondence to the individual roadside servers via the roadside antennas so as to enable the advertisement displaying vehicles having received the advertisement data to display the advertisement data,the roadside servers each adjust the ratio at which a plurality of sets of advertisement data from individual advertisers are to be transmitted to the advertisement displaying vehicles.

### BRIEF DESCRIPTION OF THE DRAWINGS

FIG. 1 shows the system configuration for road-to-vehicle communication adopted in an embodiment of the advertisement distribution method according to the present invention;
FIG. 2 shows the structure of the advertisement displaying vehicle utilized in the advertisement distribution method according to the present invention in an embodiment;
FIG. 3 shows the structure of the on-vehicle system achieved in an embodiment;
FIG. 4 shows the structure of the advertiser registration data, stored in the advertisement management server;
FIG. 5 shows the structure of the data stored at the center server;
FIG. 6 presents an example of contract information which is transmitted from the on-vehicle device to a roadside antenna; and
FIG. 7 presents a flowchart of the procedure of the processing executed at an on-vehicle device and the local server in an embodiment.

### DETAILED DESCRIPTION OF THE PREFERRED EMBODIMENT

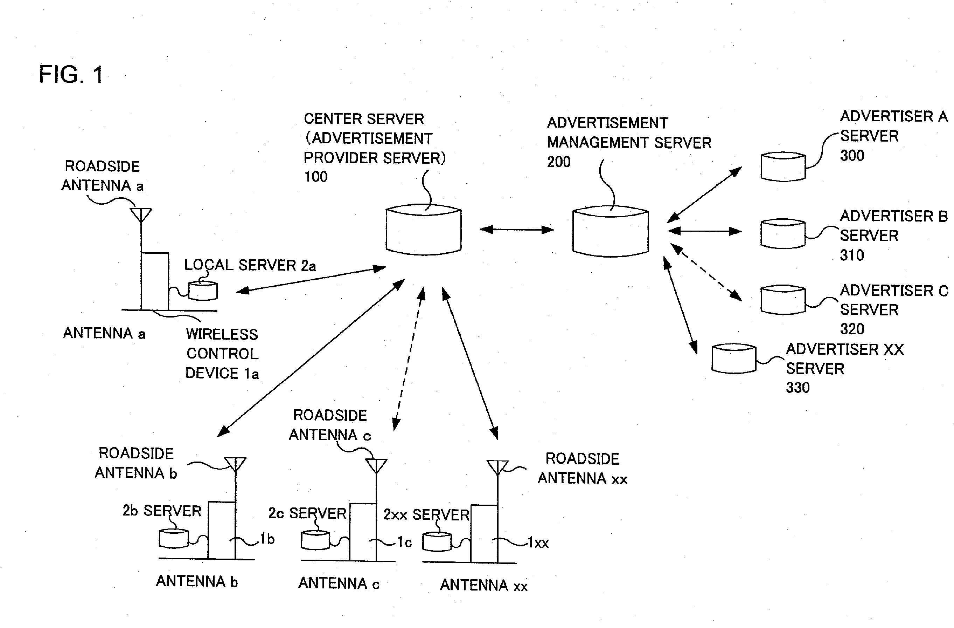

FIG. 1 shows the overall structure of a road-to-vehicle communication system achieved in an embodiment by adopting therein the advertisement distribution apparatus according to the present invention. This road-to-vehicle communication system includes a plurality of roadside systems each provided in correspondence to a given advertisement distribution zone, a center server 100 that distributes advertisements to the plurality of roadside systems, a plurality of advertiser servers 300 ~ 330,and an advertisement management server that manages advertiser registration data, advertisement contents,and the like.

The individual roadside systems respectively include roadside antennas (a ~ xx), wireless control devices (1a ~ 1xx), and local servers 2a ~ 2xx. The local servers 2a ~ 2xx exchange various types of information with the center server 100 via the corresponding roadside antennas a ~ xx. Data such as advertisement information stored at the local servers 2a ~ 2xx are transmitted to vehicles equipped with on-vehicle devices via the corresponding roadside antennas in response to commands issued by the wireless control devices 1a ~ 1xx respectively.

It is to be noted that the plurality of local servers 2a ~ 2xx and the center server 100, the center server 100 and the advertisement management server 200, the advertisement management server 200 and the advertiser servers 300 ~ 330 are individually connected with each other through high-speed networks.

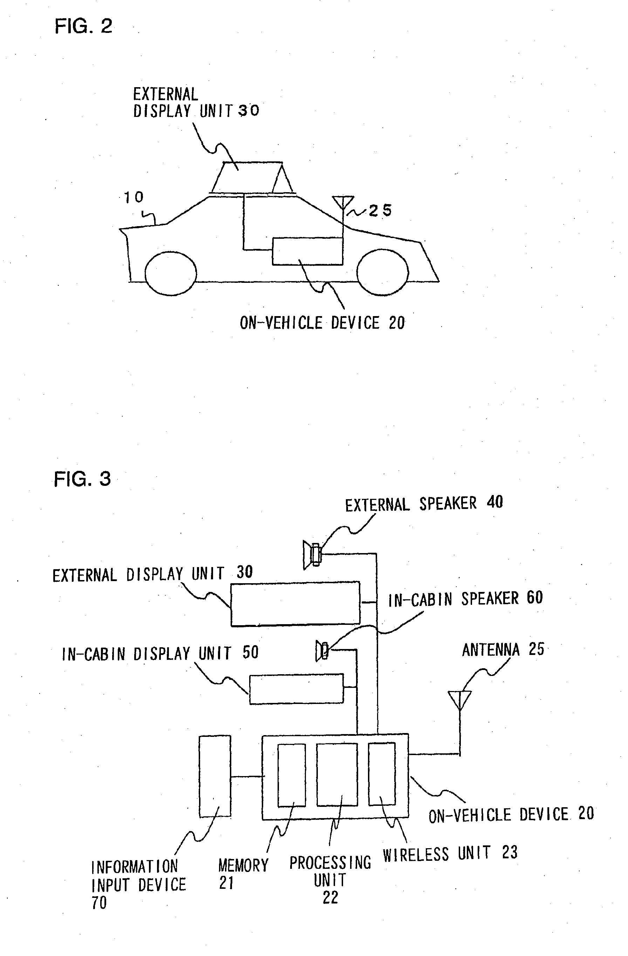

FIG. 2 shows the overall structure adopted in an embodiment of the advertisement displaying vehicle that displays advertisements transmitted from the advertisement distribution apparatus according to the present invention. An advertisement displaying vehicle 10 includes an on-vehicle device 20 which is utilized to achieve road-to-vehicle communication with the plurality of roadside systems, a communication antenna 25, an external display unit 30 to display the advertisements received through road-to-vehicle communication,and the like. While the external display unit 30 is installed on the roof of the vehicle 10, as shown in FIG. 2, it may instead be achieved by installing an electronic display board at the rear window of the vehicle 10 or by installing an electronic display board at a side of the vehicle 10. Namely, it should be installed at a position where the contents of the advertisements can be viewed by people outside the vehicle.

FIG. 3 shows the structure of the on-vehicle system, which includes the on-vehicle device 20 and the external display unit 30 described above, as achieved in an embodiment. The on-vehicle device 20 is provided with a memory 21, a processing unit 22,and a wireless unit 23. In the memory 21, information related to advertisement contracts, which is transmitted (uplinked) during a road-to-vehicle communication between the vehicle 10 and the roadside antennas a ~ xx, is stored. In addition to the external display unit 30 and the antenna 25 mentioned above, an external speaker 40, a cabin display unit 50, a cabin speaker 60,and an information input device 70 are connected to the on-vehicle device 20.

Through the information input device 70, which may be, for instance, a key-pad or a keyboard, the contract information to be detailed later is input. Alternatively, an IC card reader / writer that reads contract information that has been written in an IC card into the memory 21 may be provided as the information input device 70. At the cabin display unit 50, information input through the information input device 70 or the advertisement currently displayed at the external display unit 30 can be displayed. If the vehicle 10 is a vehicle for passenger transportation service such as a taxi, advertisements can be presented to the passengers inside the vehicle by utilizing the cabin display unit 50 and the cabin speaker 60 as well.

The processing unit 22 in the on-vehicle device 20 controls the display units 30 and 50 and the speakers 40 and 60, and also generates information to be transmitted to the roadside antennas a ~ xx based upon the data stored in the memory 21. The information thus generated is transmitted to the roadside antennas a ~ xx near the vehicle 10 via the wireless unit 23 and the antenna 25.

At the advertisement management server 200, data related to advertisers who provide advertisements are registered. An advertiser is allowed to register a plurality of sets of advertisement data in correspondence to individual zones where he wishes to provide the advertisement (in correspondence to the individual roadside systems).

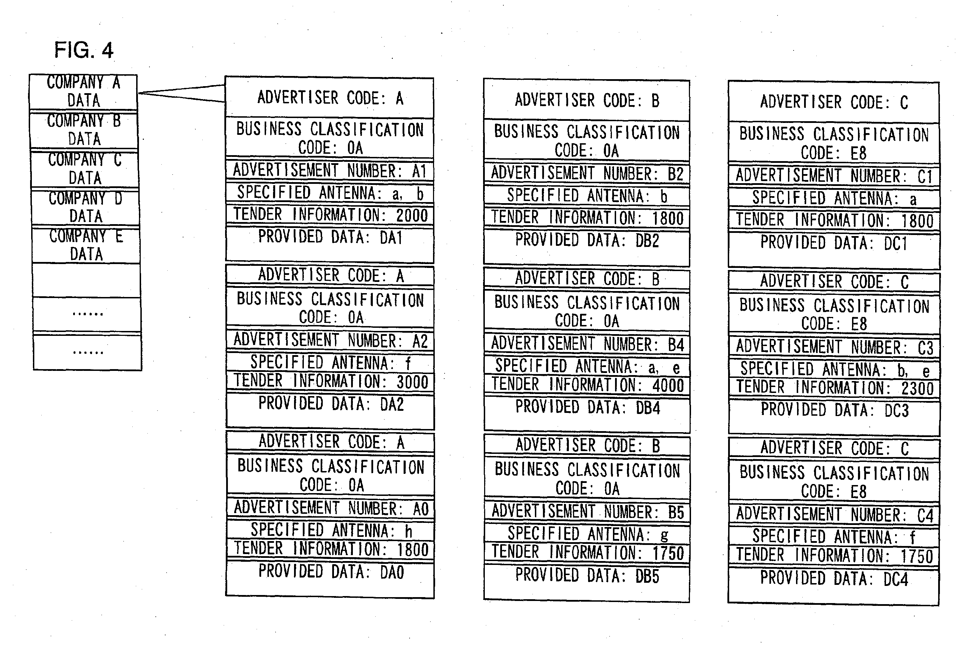

FIG. 4 shows the structure of the advertiser registration data stored at the advertisement management server 200. Each set of advertiser registration data includes an advertiser code indicating the registered advertiser, a business classification code which is set in advance through an agreement with the advertisement distribution management company operating the advertisement management server 200, an advertisement number assigned to enable identification of the type of registered advertisement, the contents of the advertisement and the date of registration, roadside antenna point information indicating the desired advertisement distribution zone, information (tender information) related to the remuneration offered for display of the advertisement at the external display unit 30 of the vehicle 10, and advertisement data which are downloaded to the on-vehicle device 20.

For instance, the data corresponding to the advertisement number A1 in FIG. 4 indicate that the advertiser, company A, wishes to have advertisement data "DA1" distributed to advertisement displaying vehicles 10 through the roadside antennas a and b. The tender information, which may be, for instance, the advertising fee, indicates the remuneration agreed upon by the advertisement distribution management company and individual advertisement exhibitors who actually display advertisements on their advertisement displaying vehicles through contract. The advertising fee set in the contract is paid to an advertisement exhibitor having displayed the advertisement on his advertisement displaying vehicle. The advertising fee may be paid, for instance, into a bank account designated by the advertisement exhibitor. If advertisement exhibitors are to be rewarded with discount points on products offered by the advertisement distribution management company or a related business or points other than such discount points instead of the advertising fee, these points are registered as the tender information.

When a point system is adopted, the points awarded to an advertisement exhibitor may be recorded into an IC card issued by the advertiser or an affiliated company. Namely, when an advertisement has been displayed at the external display unit 30, the points due to be awarded to the advertisement exhibitor are written into the IC card by using an IC card writer (the information input device 70) connected to the on-vehicle device 20. If the vehicle is not equipped with an IC card writer, information indicating that the advertisement has been displayed may be recorded into the center server 100 so that the points can be written into the IC card at a store or a service station specified by the advertiser where an IC card writer is installed. By adopting such a system, it becomes possible to award/collect points with ease by using an IC card without having to exchange cash. It is to be noted that an IC card in which points are recorded has stored therein a contract code to be detailed later to enable advertiser identification.

The center server 100 regularly checks the registration data stored at the advertisement management server 200 and sets advertisement data to be distributed to the individual roadside servers 2a ~ 2xx. The center server 100 sets the advertisement data with the timing with which data at the roadside antennas a ~ xx are updated, i.e., the timing with which bids are tendered on the roadside antennas to which advertisements are transmitted. Now, the method adopted by the center server 100 to set the advertisement data is explained.

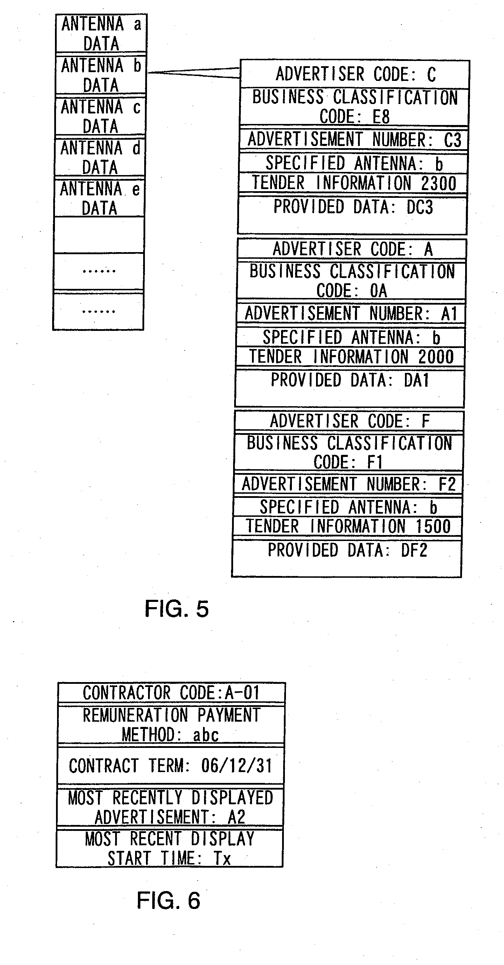

FIG. 5 shows the structure of data set at the center server 100. At the center server 100, advertisement data are set in correspondence to the individual roadside antennas a ~ xx to which the data are to be transmitted. FIG. 5 shows advertisement data set for the roadside antenna b, i.e.,. the advertisement data that advertisers wish to have transmitted to the roadside antenna b. The center server 100 designates the advertisement data attached with tender information indicating the highest bid as first priority advertisement data. Among the sets of registration data specifying the roadside antenna b in FIG. 4, the data assigned with an advertisement number C3 from company C are attached with the tender information indicating the highest bid. Accordingly, the center server 100 sets the data assigned with advertisement number C3 as the first priority advertisement data.

Next, the center server 100 designates the advertisement data which include tender information indicating the highest bid among advertisement data with business classification codes different from that of the first priority advertisement data, as a second priority advertisement data. Of the data having classification codes different from the business classification code (E8) of the first priority advertisement data in FIG. 4, the data assigned with an advertisement number A1 from company A are attached with the tender information indicating the highest bid. Accordingly, the center server 100 sets the data assigned with the advertisement number A1 as the second priority advertisement data.

The center server 100 then sets third priority advertisement data in a manner identical to the manner with which the second priority advertisement data have been set. Namely, the registration data stored at the advertisement management server 200 specifying the roadside antenna b and having business classification codes different from one another are set at the center server 100. Thus, only one set of advertisement data corresponding to a given business classification is set at the center server 100 and a plurality of sets of advertisement data in the same field of business are never set together at the center server 100.

The center server 100 regularly transmits advertisement data to the roadside antennas a ~ xx based upon the roadside antenna point information contained in the registration data set through the method described above. For instance, the advertisement data assigned with the advertisement members C3, A1 and F2 shown in FIG. 5 are all transmitted to the roadside antenna b. The advertisement data thus transmitted are received at the roadside antennas a ~ xx and are stored into the corresponding local servers 2a ~ 2xx. The local servers 2a ~ 2xx hold the latest information at all times since the advertisement data stored at the local servers 2a ~ 2xx are overwritten whenever new advertisement data are transmitted from the center server 100.

An advertisement displaying vehicle 10 engages in road-to-vehicle communication as it enters the communication range of any of the roadside antennas a ~ xx. At this time, the on-vehicle device 20 transmits contract information to the corresponding roadside antenna a ~ xx.

FIG. 6 presents an example of such contract information. This contract information includes a contractor code (A-01) that enables the advertisement management company to identify the contractor, remuneration payment information (abc) indicating the method of remuneration payment for the advertisement display, contract term information (06/12/31) indicating the contract term for the advertisement display, the advertisement number (A2) of the advertisement most recently displayed at the external display unit 30,and the display start time (Tx) at which the most recent advertisement display started. It is to be noted that if the same advertisement is still being displayed at the vehicle 10, the start time of the most recent advertisement display indicates the display start time of the advertisement currently on display.

The contract information transmitted from the on-vehicle device 20 of the vehicle requesting a transmission of advertisement data and received at one of the roadside antennas a ~ xx is then transferred to the corresponding local server 2a ~ 2xx. Based upon the contract information thus transmitted, the local server 2a ~ 2xx makes a verification as to whether or not the advertisement data currently used for display at the advertisement displaying vehicle 10 are the same as the advertisement data scheduled for transmission, as to whether or not the contract term has expired and the like. If it is determined that the advertisement data currently used for display at the advertisement displaying vehicles 10 are not the same as the advertisement data scheduled for transmission and that the contract term has not yet expired, the advertisement data are transmitted to the on-vehicle device 20 via the corresponding roadside antenna a ~ xx.

Now, the method adopted to transmit advertisement data to on-vehicle devices 20 when there are three sets of advertisement data for the antenna b set at the center server 100, as shown in FIG. 5 is explained. At the local server 2b, three sets of advertisement data, i . e . , the advertisement data assigned with the advertisement members C3, A1 and F2, are stored. The local server 2b distributes the advertisement data based upon the ratio of the numerical values indicated in the tender information attached to the advertisement data. In FIG. 5, the numerical values indicated in the tender information of the advertisement data assigned with the advertisement numbers C3, A1, and F2 are respectively 2300, 2000,and 1500, and, accordingly, the advertisement data are distributed at the ratio of 23:20:15. To simplify the explanation by assuming that there are 58 vehicles to receive advertisement data through the road-to-vehicle communication with the antenna b, the advertisement data assigned with the advertisement number C3 are transmitted to 23 advertisement displaying vehicles 10, the advertisement data assigned with the advertisement number A1 are transmitted to 20 advertisement displaying vehicles 10,and the advertisement data assigned with the advertisement number F2 are transmitted to 15 advertisement displaying vehicles 10. The advertisement data received at the individual advertisement displaying vehicles 10 are displayed at their external display units 30. During this process, the transmission priority is given in the order of; the first priority advertisement data (advertisement number C3) with the highest numerical value indicated in the tender information, the second priority advertisement data (advertisement number A1), and the third priority advertisement data (advertisement number F2).

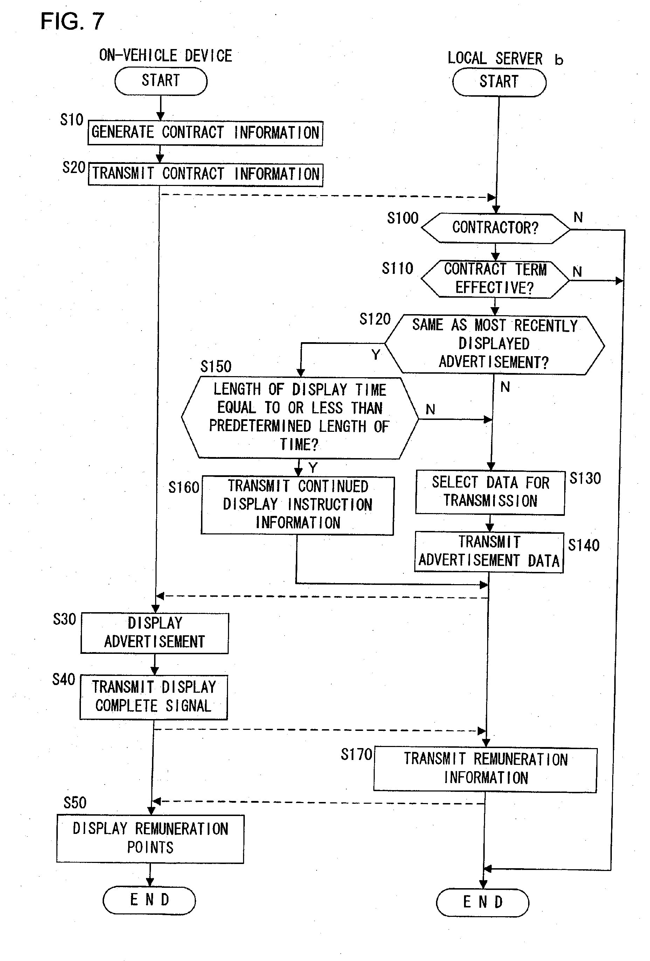

FIG. 7 presents a flowchart of the procedure of the processing individually executed at the on-vehicle devices 20 and local servers 2a ~ 2xx in an embodiment. It is to be noted that the following explanation is given by assuming that information is exchanged between an on-vehicle device 20 and the local server 2b as the vehicle 10 equipped with the on-vehicle device 20 is currently present in the communication area of the roadside antenna 1b. In addition, the explanation is given on the assumption that the three sets of advertisement data assigned with the advertisement numbers C3, A1, and F2 are stored at the local server 2b, as shown in FIG. 5. The processing at the on-vehicle device 20 is executed by the processing unit 22.

In step S10, the contract information explained earlier is generated as the on-vehicle device 20 is turn on, or as the vehicle 10 enters the communication area of the roadside antenna b or the vehicle 10 is judged to enter the communication area with certainty. More specifically, new contract information is generated by updating the advertisement number corresponding to the advertisement most recently displayed at the external display unit 30 and the display start time of the most recently displayed advertisement in the previously prepared contract information. Once the contract information is generated, the operation proceeds to step S20. In step S20, a signal indicating that the vehicle has entered the communication area of the roadside antenna b is first received from the wireless unit 23 and then the contract information generated in step S10 is transmitted to the roadside antenna b.

The contract information transmitted from the on-vehicle device 20 is received at the roadside antenna b and is then transferred to the local server 2b. In step S100, a decision is made as to whether or not the vehicle is driven by a contracted advertisement exhibitor based upon the contractor code contained in the contract information that has been received. Once it is decided that the vehicle is driven by a contractor, the operation proceeds to step S110, whereas if it is decided that the vehicle is not driven by a contractor, the control in this flowchart ends. In step S110, a decision is made as to whether or not the contract term is still in effect based upon the contract term information included in the contract information. The operation proceeds to step S120 if the contract term is determined to be still in effect, whereas if it is decided that the contract term has expired, the processing in the flowchart ends.

In step S120, a decision is made based upon the "advertisement number of the advertisement most recently displayed at the external display unit 30" contained in the contract information as to whether or not the advertisement data most recently displayed at the external display unit 30 are identical to any of the advertisement data stored at the local server 2b. If the advertisement number of the advertisement data most recently displayed at the external display unit 30 matches any of C3, A1, and F2, it is determined that the most recently displayed advertisement data are identical to the stored advertisement data at the local server 2b and the operation proceeds to step S150, whereas the operation proceeds to step S130 if it is decided that the advertisement data are not identical.

In step S130, the advertisement data to be transmitted to the on-vehicle device 20 are selected from the advertisement data assigned with the advertisement numbers C3, A1, and F2, based upon the ratio of the numerical values indicated in the tender information. Once the advertisement data to be transmitted are selected, the operation proceeds to step S140. In step S140, the advertisement data selected in step S130 are transmitted to the device 20. Upon transmitting the advertisement data, the operation proceeds to step S170.

In step S150, to which the operation proceeds after deciding that the advertisement data most recently displayed at the external display unit 30 are registered at the local server 2b, a decision is made as to whether or not a predetermined length of time has elapsed after starting the advertisement display based upon the "display start time information indicating the display start time of the most recently displayed advertisement data" contained in the contract information. It is to be noted that the predetermined length of time should be agreed upon in advance in the contract or the like. If it is decided that the predetermined length of time has elapsed, the operation proceeds to step S130, whereas if it is decided that the predetermined length of time has not yet elapsed, the operation proceeds to step S160.

In step S160, a signal indicating the advertisement most recently displayed at the external display unit 30 is to be continuously displayed is transmitted to the on-vehicle device 20. As a result, redundant transmission of the advertisement data that are already stored in the memory 21 of the on-vehicle device 20 is avoided.

It is to be noted that while the same advertisement data may be retransmitted in step S160, it takes a considerable length of communication time to download advertisement data into the on-vehicle device 20. While the on-vehicle device 20 is downloading the same advertisement data, another vehicle may enter the communication area and request advertisement data. In such a case, the advertisement data may not be downloaded to the other vehicle promptly. For this reason, the instruction signal indicating that the advertisement most recently displayed is to be continuously displayed is simply transmitted in step S160 in the embodiment.

In step S30, the on-vehicle device 20 displays the advertisement data transmitted from the local server 2b (step S140) at the external display unit 30. Or, if the information indicating that the most recently displayed advertisement is to be continuously displayed has been received (step S160), the most recently displayed advertisement which is stored in the memory 21 is displayed at the external display unit 30 in step S30. Once the advertisement is displayed, the operation proceeds to step S40. In step 540, an instruction is issued to the wireless unit 23 to transmit a signal indicating that the advertisement display has been completed to the roadside antenna b. In response to the instruction from the processing unit 22, the wireless unit 23 transmits the signal indicating the completion of the advertisement display to the roadside antenna b.

The advertisement display complete signal transmitted from the on-vehicle device 20 is transferred to the local server 2b via the roadside antenna b. Upon receiving the signal, the local server 2b transmits data indicating the amount of remuneration generated by displaying the advertisement at the advertisement displaying vehicle 10 to the on-vehicle device 20. At this time, the local server 2b transmits information that includes performance data indicating the number of vehicles to which the advertisement data have been transmitted, i.e., the number of vehicles at which the advertisement has been displayed to the advertiser via the center server 100. The information transmitted to the advertiser may include information to identify the specific advertisement exhibitors who have displayed the advertisement and information indicating the specific time points at which the advertisement has been displayed. Once the processing in step S170 is completed, the processing executed at the local server 2b ends.

The on-vehicle device 20 having received the remuneration information transmitted from the local server 2b via the antenna 25 displays the payment due for the advertisement display at the cabin display unit 50. This remuneration may be a monetary fee or any of various types of points as explained earlier. After the remuneration for the advertisement display is displayed at the cabin display unit 50, the control executed at the on-vehicle device 20, too, ends.

By utilizing the advertisement distribution apparatus achieved in the embodiment, which calculates the ratio at which individual sets of advertisement data should be transmitted to advertisement displaying vehicles, and transmits the advertisement data selected from a plurality of sets of advertisement data based upon the calculated rate, it becomes possible to ensure that the plurality of sets of advertisement data are given balanced public exposure, instead of allowing overexposure of an advertisement from a given advertiser. Namely, it becomes possible to control as appropriate the number of advertisement displaying vehicles that carry a specific advertisement inside a given advertisement distribution zone.

In the method in the related art, in which advertisements are displayed through contracts between advertisers and the owners of advertisement displaying vehicles, an advertisement displaying vehicle wirelessly communicating with a roadside antenna cannot receive any advertisement data unless advertisement data from an advertiser contracting the vehicle are registered. In the advertisement distribution apparatus achieved in the embodiment, advertisement data are distributed without fail as long as there are advertisement data stored at the local server installed in correspondence to the roadside antenna with which the vehicle has wirelessly communicated and, as a result, the advertisement exhibitor can earn a specific level of advertising remuneration. In addition, the advertisement exhibitor does not need to sign contracts with a plurality of advertisers and, instead, only needs to sign a contract with a single partner, i.e., the advertisement distribution management company operating the advertisement distribution system described above.

In this advertisement distribution system, since the ratio at which a plurality of sets of advertisement data are to be transmitted to the advertisement displaying vehicles is determined based upon the tender information (indicating the remuneration for the advertisement display), and thus, a fair advertisement distribution reflecting the rates of advertising remuneration that the individual advertisers are willing to pay can be realized. In addition, as the first transmission priority is given to the advertisement data having the highest rate of remuneration, an even fairer advertisement distribution is achieved. By making an adjustment so that the ratio at which individual sets of advertisement data are transmitted to advertisement displaying vehicles operating in a given advertisement distribution match the ratio of the advertising remuneration offered for displaying the advertisement data which are stored at the local corresponding servers 2a ∼ 2xx, an even fairer advertisement distribution is assured.

By adopting the advertisement distribution apparatus achieved in the embodiment, in which only one set of advertising data related to a given field of business is stored at each of the local servers 2a ∼ 2xx, the likelihood of advertisement data from a competitor in the same business field being exhibited in the area around the local server is reduced. As a result, the advertiser can have effective exposure of the desired advertisement in the specific area. In addition, since a single set of advertisement data is selected from advertisement data from advertisers in a given field of business based upon the numerical values indicated in the tender information attached to the advertisement data, a healthy competition among the businesses in the field is promoted to raise advertising fees, which generates stable income for the advertisement distribution management company and for the advertisement exhibitors.

The above described embodiment is an example, and various modifications can be made without departing from the spirit and scope of the invention. For instance, in step S10 in the flowchart presented and FIG. 7, the on-vehicle device 20 generates contract information when the on-vehicle device 20 is set in an ON state, when the vehicle 10 has entered the communication area of the roadside antenna b or when the advertisement displaying vehicle 10 is expected to enter the communication area with a high degree of certainty. However, contract information may be generated when an IC card having contract information recorded therein is inserted into the IC card reader (the information input device 70) and the contract information is transferred from the IC card into the memory 21, instead.

In addition, if a great number of advertisers wish to have advertisement data transmitted through a particular roadside antenna, the remuneration for advertisement display through the roadside antenna may be raised from the amount set in the original contract. A decision as to whether or not a given roadside antenna is attracting a great number of advertisers may be made based upon whether or not the number of sets of advertisement data stored at the local server has exceeded a predetermined value. Since higher advertising remuneration can be offered to advertisement displaying vehicles 10 in such a case, the traffic of vehicles 10 entering the specific area where the roadside antenna is installed is expected to increase. In other words, since the number of times advertisements are transmitted via the specific roadside antenna increases, the efficiency of the advertisement distribution system itself is improved. In this situation, the information indicating the position of a roadside antenna through which advertisement data with higher advertising remuneration are transmitted should be provided to the advertisement displaying vehicles 10 via the Internet, road-to-vehicle communication or the like.

While two servers, i.e., the center server 100 and the advertisement management server 200, are provided to select advertisement data to be stored into the local servers 2a ~ 2xx through the processing executed at the individual servers in the embodiment described above, a single server, in place of the center server 100 and the advertisement management server 200, may be utilized to execute the entire processing. In the same way, while local servers 2a ∼ 2xx are provided in correspondence to a given advertisement distribution zone in the embodiment described above, a single server may be provided, which stores in memory a plurality of sets of advertisement data.

While an explanation is given above on the assumption that an advertisement display vehicle 10 having received advertisement data displays the advertisement at the external display unit 30, the advertisement may also be displayed at the in-cabin display unit 50, and an audio output of the advertisement may be provided through the external speaker 40 or the in-cabin speaker 60 as well. An advertisement displaying vehicle 10 may be a large vehicle such as a bus or a truck or it may be a two-wheeled vehicle such as a motorcycle, instead of a standard vehicle. Furthermore, the present invention is not limited to a specific type of communication medium such as radio, light,or ultrasound waves, utilized in the road-to-vehicle communication.

## Claims

1. An advertisement distribution apparatus comprising:
storage means (2a ∼ 2xx) for storing in memory a plurality of sets of advertisement data from a plurality of advertisers;
ratio calculation means (2a ∼ 2xx) for calculating a ratio at which the plurality of sets of advertisement data are to be transmitted to vehicles (10) for displaying the advertisement (hereafter referred to as advertisement displaying vehicles);
selection means (2a ~ 2xx) for selecting advertisement data to be transmitted to each advertisement displaying vehicle (10) from the plurality of sets of advertisement data stored in the storage means (2a ~ 2xx) based upon the ratio calculated by the ratio calculation means (2a ∼ 2xx); and
data transmission means (1a ~ 1xx) for transmitting the advertisement data selected by the selection means (2a ∼ 2xx) to the individual advertisement displaying vehicles (10) .

2. An advertisement distribution apparatus according to claim 1, wherein:
the ratio calculation means (2a ~ 2xx) calculates the ratio at which the plurality of sets of advertisement data are to be transmitted based upon remuneration (hereafter referred to as advertising remuneration) offered for displaying the advertisement data at the advertisement displaying vehicles (10).

3. An advertisement distribution apparatus according to claim 2, wherein:
the selection means (2a ∼ 2xx) selects advertisement data by giving priority to advertisement data offering a larger advertising remuneration.

4. An advertisement distribution apparatus according to claim 2 or 3, wherein:
advertising remunerations are advertising fees.

5. An advertisement distribution apparatus according to any one of claims 2 ∼ 4, further comprising:
advertisement management means (100) for managing advertisement data to be stored into the storage means (2a ~ 2xx), wherein:
the advertisement management means (100) manages the advertisement data so that a single set of advertisement data in a given area of business is stored into each storage means (2a ∼ 2xx) .

6. An advertisement distribution apparatus according to claim 5, wherein:
the advertisement management means (100) raises the advertising remuneration for displaying advertisement data stored at a storage means (2a ~ 2xx) if the number of sets of advertisement data stored at the storage means (2a ~ 2xx) exceeds a predetermined value.

7. An advertisement distribution apparatus according to claim 6, further comprising;
information providing means (1a ~ 1xx) for providing position information indicating the position of the storage means (2a ~ 2xx) having stored therein the advertisement data, the advertising remuneration for which have been raised by the advertisement management means (100) to the advertisement displaying vehicles (10).

8. An advertisement distribution method for transmitting advertisement data from a plurality of roadside servers (2a ~ 2xx) at which the advertisement data are stored to vehicles for displaying the advertisement (hereafter referred to as advertisement displaying vehicles) present within communication ranges of roadside antennas (a ∼ xx) installed in correspondence to the individual roadside servers (2a ~ 2xx) via the roadside antennas (a ∼ xx) so as to enable the advertisement displaying vehicles (10) having received the advertisement data to display the advertisement data,
wherein:
the roadside servers (2a ∼ 2xx) each adjust the ratio at which a plurality of sets of advertisement data from individual advertisers are to be transmitted to the advertisement displaying vehicles (10).
